# EUROPEAN PATENT APPLICATION

(11) **EP 3 812 926 A1**
(43) Date of publication of application: **28.04.2021**
(21) Application number: 20196650.4
(22) Date of filing: 17.09.2020
(51) Int. Cl.: G06F 16/36, G06F 16/483

(54) **MULTIMODAL CONTENT PROCESSING METHOD, APPARATUS, DEVICE AND STORAGE MEDIUM**

(30) Priority: 15.01.2020 CN 202010044247
(71) Applicant: BEIJING BAIDU NETCOM SCIENCE TECHNOLOGY CO., LTD., No.10 Shangdi 10th Street Haidian District Beijing 100085 (CN)
(72) Inventor: FENG, Zhifan, BEIJING, 100085 (CN); WANG, Haifeng, BEIJING, 100085 (CN); REN, Kexin, BEIJING, 100085 (CN); ZHU, Yong, BEIJING, 100085 (CN); LV, Yajuan, BEIJING, 100085 (CN)
(74) Representative: Studio Torta S.p.A.

(57) **Abstract**

The present disclosure discloses a multimodal content processing method, apparatus, device and storage medium, which relate to the technical field of artificial intelligence. The specific implementation is: receiving a content processing request of a user which is configured to request semantic understanding of multimodal content to be processed, analyzing the multimodal content to obtain the multimodal knowledge nodes corresponding to the multimodal content, determining a semantic understanding result of the multimodal content according to the multimodal knowledge nodes, a pre-constructed multimodal knowledge graph and the multimodal content, the multimodal knowledge graph including: the multimodal knowledge nodes and an association relationship between multimodal knowledge nodes. The technical solution can obtain an accurate semantic understanding result, realize an accurate application of multimodal content, and solve the problem in the prior art that multimodal content understanding is inaccurate.

## Description

### TECHNICAL FIELD

The present disclosure relates to the field of data processing technology, and in particularly, to a multimodal content processing method, apparatus, device and storage medium in artificial intelligence technology.

### BACKGROUND

Graphic and text, and video content resources are currently the mainstream resource forms of the Internet. Accurate understanding of multimodal content with multiple modalities, such as a graphic and text content and a video content, is an important foundation and a core requirement for an intelligent product.

In a prior art, in order to accurately understand the true meaning of multimodal content, such as a graphic and text, and a video content resource or the like, semantic analysis is usually performed on the multimodal content by using text, visual, voice technologies etc., separately, to obtain single-modal understanding results, and then multiple single-modal understanding results are fused to obtain a final multimodal understanding result.

However, the above method can only determine knowledge nodes such as an object, a person or a word corresponding to the multimodal content, rather than to clarify a relationship between the knowledge nodes, and an event that actually occurred, and therefore, a problem arises that a semantic understanding result is inaccurate.

### SUMMARY

Embodiments of the present disclosure provide a multimodal content processing method, apparatus, device and storage medium, which are used to solve a problem in an existing multimodal content processing method that a semantic understanding result is inaccurate.

In a first aspect, the present disclosure provides a multimodal content processing method, including:
receiving a content processing request of a user which is configured to request semantic understanding of multimodal content to be processed;
performing analysis to the multimodal content to obtain multimodal knowledge nodes corresponding to the multimodal content; and
determining a semantic understanding result of the multimodal content according to the multimodal knowledge nodes, a pre-constructed multimodal knowledge graph and the multimodal content, the multimodal knowledge graph including: the multimodal knowledge nodes and an association relationship between the multimodal knowledge nodes.

In this embodiment, due to that multimodal knowledge nodes and a multimodal knowledge graph are adopted to perform understanding on multimodal content, thereby obtaining an accurate semantic understanding result, realizing an accurate application of a multimodal content, and solving the problem in the prior art that multimodal content understanding is inaccurate.

In a possible design of the first aspect, where the determining a semantic understanding result of the multimodal content according to the multimodal knowledge nodes, a pre-constructed multimodal knowledge graph and the multimodal content, includes:
determining the association relationship between the multimodal knowledge nodes according to the multimodal knowledge nodes and the multimodal knowledge graph.
determining a basic semantic understanding result of the multimodal content according to the multimodal knowledge nodes and a preset semantic understanding method; and
determining the semantic understanding result of the multimodal content according to the association relationship between the multimodal knowledge nodes, the basic semantic understanding results and the multimodal knowledge graph.

The basic semantic understanding result includes: a first semantic understanding result and/or a second semantic understanding result;
the first semantic understanding result is obtained by performing semantic understanding on the multimodal content according to the multimodal knowledge nodes and a preset deep learning method;
the second semantic understanding result is obtained by fusing multiple single-modal semantic understanding results corresponding to the multimodal knowledge nodes according to a preset fusion method.

In this embodiment, the association result based on the knowledge graph, the fusion modeling result based on deep neural network, and the fusion scheme based on single-modal understanding results jointly realize a semantic understanding of the multimodal content, which further improves the accuracy in understanding of multimodal content.

In another possible design of the first aspect, the method further includes:
obtaining a multimodal data set which includes multiple multimodal content samples;
processing the multimodal data set to determine an ontology of the multimodal knowledge graph;
mining multimodal knowledge node samples of each of the multimodal content samples in the multimodal data set;
establishing an association relationship between the multimodal knowledge node samples through knowledge graph representation learning; and
constructing the multimodal knowledge graph based on the association relationship between the multimodal knowledge node samples and the ontology of the multimodal knowledge graph.

The technical solution of the present disclosure, semantic interpretation is designated to knowledge nodes by constructing a multimodal knowledge graph, which lays a foundation for achieving a correct semantic understanding of multimodal content.

In another possible design of the first aspect, the method further includes:
outputting a semantic understanding result of the multimodal content based on a semantic representation method of a knowledge graph.

In another possible design of the first aspect, the method further includes:
obtaining a recommended resource of the same type as the multimodal content according to a vector representation of the semantic understanding result; and
pushing the recommended resources to the user;
   or,
determining a text understanding result of the multimodal content according to the vector representation of the semantic understanding result; and
performing a search process to obtain a search result for the multimodal content according to the text understanding result.

The technical solution of this embodiment achieves accurate resource recommendation and intelligent searching.

In a second aspect, the present disclosure provides a multimodal content processing apparatus, including: a receiving module, a processing module, and a determining module;
the receiving module is configured to receive a content processing request of a user which is configured to request semantic understanding of multimodal content to be processed;
the processing module is configured to analyze the multimodal content to obtain multimodal knowledge nodes corresponding to the multimodal content;
the determining module is configured to determine a semantic understanding result of the multimodal content according to the multimodal knowledge nodes, a pre-constructed multimodal knowledge graph and the multimodal content, the multimodal knowledge graph including: the multimodal knowledge nodes and an association relationship between the multimodal knowledge nodes.

In a possible design of the second aspect, the determining module is specifically configured to determine the association relationship between the multimodal knowledge nodes according to the multimodal knowledge nodes and the multimodal knowledge graph, determine a basic semantic understanding result of the multimodal content according to the multimodal knowledge nodes and a preset semantic understanding method, and determine the semantic understanding result of the multimodal content according to the association relationship between the multimodal knowledge nodes, the basic semantic understanding result and the multimodal knowledge graph.

The basic semantic understanding result includes: a first semantic understanding result and/or a second semantic understanding result;
the first semantic understanding result is obtained by performing semantic understanding on the multimodal content according to the multimodal knowledge nodes and a preset deep learning method;
the second semantic understanding result is obtained by fusing multiple single-modal semantic understanding results corresponding to the multimodal knowledge nodes according to a preset fusion method.

In another possible design of the second aspect, the processing module is further configured to obtain a multimodal data set which includes multiple multimodal content samples, process the multimodal data set to determine an ontology of the multimodal knowledge graph, mine multimodal knowledge node samples of each of the multimodal content samples in the multimodal data set, through knowledge graph representation learning, establish an association relationship between the multimodal knowledge node samples through knowledge graph representation learning, and construct the multimodal knowledge graph based on the association relationship between the multimodal knowledge node samples and the ontology of the multimodal knowledge graph.

In yet another possible design of the second aspect, the apparatus further includes: an output module;
the output module is configured to output a semantic understanding result of the multimodal content based on a semantic representation method of a knowledge graph.

In yet another possible design of the second aspect, the apparatus further includes: an output module;
the processing module is further configured to obtain a recommended resource of the same type as the multimodal content according to a vector representation of the semantic understanding result; and
the output module is configured to push the recommended resource to the user;
or,
the determining module is further configured to determine a text understanding result of the multimodal content according to the vector representation of the semantic understanding result; and
the processing module is further configured to perform a search process to obtain a search result for the multimodal content according to the text understanding result;
the output module is configured to output the search result for the multimodal content.

The apparatus provided in the second aspect of the present disclosure may be used to execute the method provided in the first aspect, and its implementation principles and technical effects are similar, which will not be repeated here.

In a third aspect, the present disclosure provides an electronic equipment, including:
at least one processor; and
a memory communicatively connected to the at least one processor; where,
the memory stores instructions executable by the at least one processor, the instructions, when executed by the at least one processor, causing the at least one processor to execute the method according to the first aspect and the various possible designs of the first aspect.

In a fourth aspect, the present disclosure provides a non-transitory computer-readable storage medium with computer instructions stored thereon, the computer instructions are configured to cause the computer to execute the method according to the first aspect and the various possible designs of the first aspect.

In a fifth aspect, the present disclosure provides a multimodal content processing method, including:
determining multimodal content to be processed in response to an external content processing request;
determining a semantic understanding result of the multimodal content according to a pre-constructed knowledge graph and the multimodal content.

An above embodiment in the disclosure has the following advantages or beneficial effects. A content processing request of a user is received, where the content processing request is configured to request semantic understanding of multimodal content to be processed, the multimodal content is analyzed to obtain the multimodal knowledge nodes corresponding to the multimodal content, a semantic understanding result of the multimodal content is determined according to the multimodal knowledge nodes, a pre-constructed multimodal knowledge graph and the multimodal content, where the multimodal knowledge graph includes: the multimodal knowledge nodes and an association relationship between the multimodal knowledge nodes. The technical solution uses multimodal knowledge nodes and the multimodal knowledge graph to perform understanding of multimodal content, thereby overcoming the problem that a relationship between multimodal knowledge nodes and an event that actually occurred is not clarified, and then obtaining an accurate semantic understanding result, and realizing a precise application of the multimodal content.

Other effects induced by the foregoing manners will be described in the following in conjunction with specific embodiments.

### BRIEF DESCRIPTION OF DRAWINGS

The accompanying drawings are used for better understanding of the solution but do not constitute any limitation on the present disclosure. In the drawings:
FIG. 1 is a schematic diagram of an application scenario of a multimodal content processing method provided in the present disclosure;
FIG. 2 is a schematic flowchart of a multimodal content processing method provided in a first embodiment of the present disclosure;
FIG. 3 is a schematic diagram of a scenario in childcare;
FIG. 4 is a schematic diagram of processing multimodal content provided in the embodiment.
FIG. 5 is a schematic flowchart of a multimodal content processing method according to a second embodiment of the present disclosure;
FIG. 6 is a schematic flowchart of a multimodal content processing method according to a third embodiment of the present disclosure;
FIG. 7 is a schematic diagram of a framework for constructing a multimodal knowledge graph;
FIG. 8 is a schematic structural diagram of a multimodal content processing apparatus provided in an embodiment of the present disclosure;
FIG. 9 is a block diagram of an electronic device used to implement the multimodal content processing method according to an embodiment of the present disclosure.

### DESCRIPTION OF EMBODIMENTS

Exemplary embodiments of the present disclosure are described in the following in conjunction with the accompanying drawings, which includes various details of the embodiments of the present disclosure to facilitate understanding, and should be considered as merely exemplary. Therefore, those of ordinary skill in the art should recognize that various changes and modifications may be made to the embodiments described herein without departing from the scope and spirit of the present disclosure. Also, for clarity and conciseness, descriptions of well-known functions and structures are omitted in the following description.

Before introducing the technical solutions of the present disclosure, the terms involved in the present disclosure is explained firstly:

### Multimodal content:

Multimodal content is a resource with multiple modalities, where each source or form of information may be referred to as a modality. For example, a tactile sense, a hearing sense, a sight sense or a smell sense that a person has; a medium of information, including a voice, a video, a text, etc.; various sensors such as a radar, an infrared sensor, an accelerometer, etc. Each of the above may be referred to as a modality. In addition, modality may also have a very broad definition. For example, two different languages may also be regarded as two modalities, and even data sets collected under two different situations may also be considered as two modalities.

### Knowledge graph:

A knowledge graph, which is composed of nodes and edges in a form of a graph, is a structured representation of knowledge. A node of a knowledge graph may also be referred to as a knowledge node which represents information including but not limited to an entity, a concept, an event, an action, a function, a theme, a scenario, a source, a visual resource, a voice resource, a text resource, a user behavior, etc. Correspondingly, an edge of a knowledge graph may also be referred to as an association relationship between the knowledge nodes which represents information including but not limited to an attribute, an affiliation, a time sequence or causality.

Among the above, an entity of a knowledge graph may be understood as some objects that exist in the objective world, such as a person, an animal, a plant, etc.; a concept may be explained as a collection of entities with a same attribute, such as workers, celebrities, babies, mothers; a function may be explained as a capability or a functional attribute that an entity has, which, in some scenarios, has a same meaning as an action; a theme may be understood as a topic, such as artificial intelligence, communication, etc.; a scenario refers to a specific scene or a situation in daily life, for example, a working scene, a dining scene, a learning scene, etc.; a source refers to a source of a resource, for example, a video resource comes from a personal account, an educational resource comes from an account of an educational institution, etc.; a visual resource refers to a visual file in various formats, such as a video file or an image file; a voice resource may be a resource, such as a music or a voice call; a text resource may be a document, etc.

It is worth noting that the above is only a simple explanation of the knowledge nodes of a knowledge graph. In a practical application, the knowledge nodes of a knowledge graph may also include other content, in addition, a presentation form of the above knowledge node is not limited in the present disclosure, it may be determined according to an actual situation.

At present, knowledge graph, as one of the key technologies of artificial intelligence, has been widely used in for example, text understanding, intelligent recommendation, intelligent search and other multiple tasks, where, in terms of text understanding, it may be interpreted as processing a given text to obtain multiple text fragments, associating the obtained multiple text fragments with knowledge nodes in a knowledge graph, and determining a semantic understanding result of the text based on the association result. In terms of intelligent recommendation, it may be interpreted as performing semantic understanding on a video that a user is watching or content that a user is searching for, and combining with a knowledge graph to infer an event that actually draws the attention of the user, and then recommending similar content to the user based on the event. In terms of intelligent search, it may be applied to a scenario with few text words, where a resource that a user is interested in is processed firstly, and then in combination with a knowledge graph, an event that actually draws the attention of the user is inferred, and the event is presented in a text form, thus more searching results can be obtained when a resource searching is performed with the text of the event.

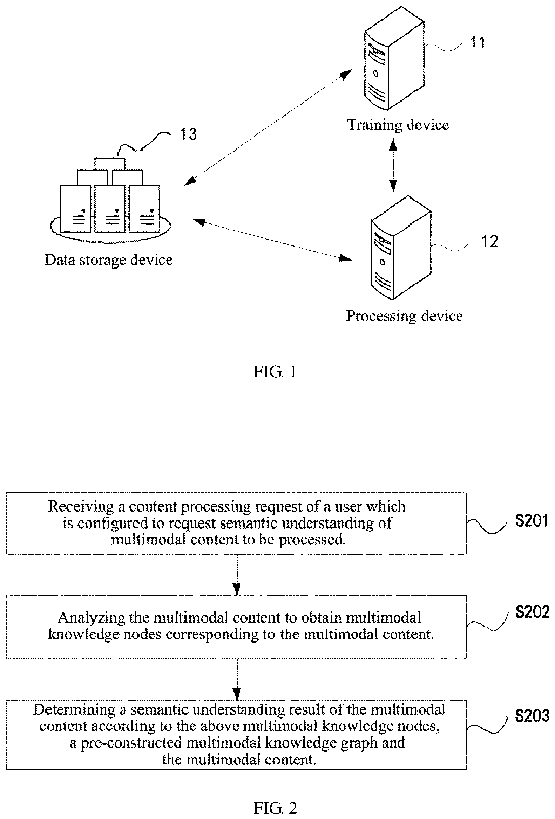

A system structure designed in an embodiment of the present disclosure is described below in conjunction with FIG. 1. FIG. 1 is a schematic diagram of an application scenario of a multimodal content processing method provided in the present disclosure. As shown in FIG. 1, the application scenario may include: a training device 11, a processing device 12, and a data storage device 13. Exemplarily, in the application scenario shown in FIG. 1, the training device 11 may obtain multimodal content for constructing a knowledge graph from a web page and store the multimodal content in the data storage device 13 so that it can be used directly when a multimodal knowledge graph is constructed subsequently. The processing device 12 may receive multimodal content to be processed which is input externally and process the multimodal content, and may store a processing result in the data storage device 13.

In the present embodiment, the data storage device 13 may store a large amount of multimodal content for constructing a knowledge graph, and may also store a processing result of the processing device 12. The training device 11 is configured to execute program codes of a knowledge graph constructing method based on the multimodal content for constructing a knowledge graph in the data storage device 13 to construct the multimodal knowledge graph. The processing device 12 is configured to execute program codes of a multimodal content processing method based on the multimodal content to be processed in the data storage device 13 to obtain a semantic understanding result of the multimodal content.

It should be understood that the multimodal knowledge graph is a kind of general knowledge graph. A general knowledge graph is a knowledge graph constructed by the training device through processing acquired content of various modalities. In a practical application, a multimodal knowledge graph may feed back to a general knowledge graph, and a multimodal knowledge graph can be obtained by screening a general knowledge graph.

It should be noted that FIG. 1 is only a schematic diagram of an application scenario provided in an embodiment of the present disclosure. The positional relationship between the devices shown in FIG. 1 does not constitute any limitation. For example, in FIG. 1, the data storage device 13 may be an external storage with respect to the processing device 12. In other cases, the data storage device 13 may also be placed in the processing device 12. In the embodiment of the present disclosure, the training device 11 and the processing device 12 may be a same device or different devices, which is not limited in the embodiment of the present disclosure.

Exemplarily, the technical solution of the present disclosure is described in detail in the following by taking an example that the training device 11 and the processing device 12 are the same electronic device. Whether the electronic device is specifically a server or a terminal device is not limited in the embodiment of the present disclosure, which can be determined according to an actual condition.

In the following, the technical solution of the present disclosure is described in detail through specific embodiments. It should be noted that the following specific embodiments may be combined with each other, and the same or similar concepts or processes may not be repeated in some embodiments.

FIG. 2 is a schematic flowchart of a multimodal content processing method provided in a first embodiment of the present disclosure. As shown in FIG. 2, the method may include the following steps:
S201, receiving a content processing request of a user which is configured to request semantic understanding of content to be processed.

In the embodiment of the present disclosure, when semantic understanding of multimodal content is required, a user may send to the electronic device a content processing request which includes the multimodal content to be processed. Correspondingly, the electronic device may receive and recognize the content processing request, and subsequently analyze the multimodal content to be processed in the content processing request to determine a semantic understanding result corresponding to the multimodal content.

It should be understood that the user may send the content processing request to the electronic device in various manners, for example, the content processing request may be sent to the electronic device through at least one of the manners, such as a click operation, a touch operation, a press operation, a voice input or the like. The present disclosure does not limit the manners in which the user sends the content processing request, which can be determined according to an actual application scenario. For example, for an electronic device with a human-computer interaction interface, a user may send the content processing request by operating on the human-machine interaction interface, and for an intelligent device with a human-computer interaction dialogue, it may obtain the content processing request through a voice command issued by a user.

Exemplarily, in this embodiment, the multimodal content to be processed may be a video, for example, a movie clip, a short video of daily life, or a text image, for example, an image of an ID card. The embodiments of the present disclosure do not limit the presentation form of the multimodal content, which can be determined according to an actual situation.

S202, analyzing the multimodal content to obtain multimodal knowledge nodes corresponding to the multimodal content.

In this embodiment, after receiving the content understanding request of the user, the electronic device firstly determines the multimodal content in the content processing request, and then analyzes the multimodal content to determine the multimodal knowledge nodes included in the multimodal content.

Exemplarily, analysis on the multimodal content is performed mainly based on multiple modalities of the multimodal content, such as a visual, a voice, or a text modality, which may be used as basic content for semantic understanding. The embodiments of the present disclosure mainly use techniques of visual analysis, voice recognition, and text understanding. For example, with respect to a video, it may be interpreted from different dimensions; visually, it may be determined who is in the video through face analysis, and it may be determined what text, animals or objects appear in the video through optical character recognition (OCR); in terms of voice, a voice of a person is converted into a text, which is to be combined with a text embedded in the video itself for semantic understanding.

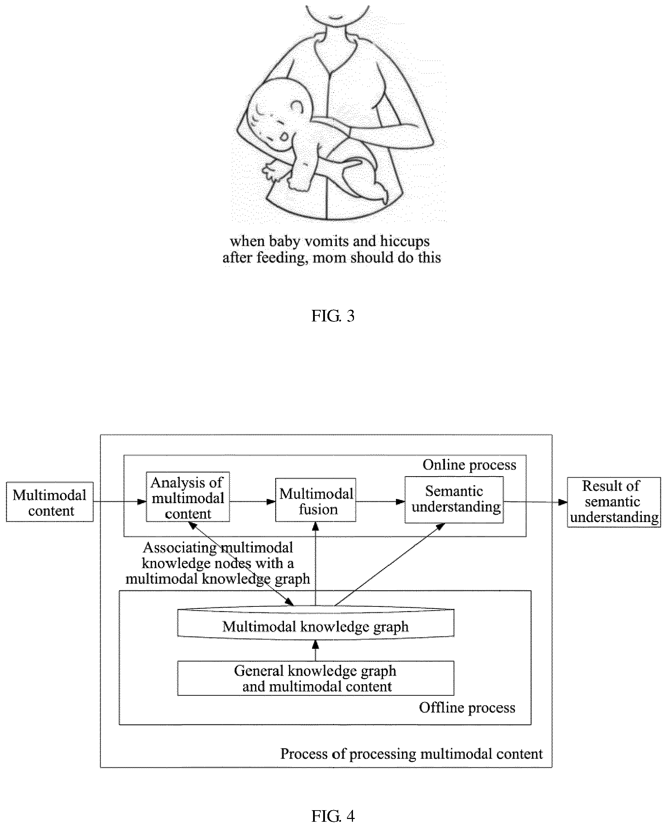

For example, FIG. 3 is a schematic diagram of a scenario in childcare. As shown in FIG. 3, taking a video clip (including text, visual, and voice information) as an example, in this scenario, the multimodal content is a short video of childcare. "In the video: a woman is patting a baby; the video is accompanied with a text description: when baby vomits and hiccups after feeding, mom should do this". It can be understood visually (baby, mom, a patting action), and keywords can be understood through the texts (vomit, baby, hiccup), etc., that is, the multimodal knowledge nodes corresponding to the multimodal content may include: person "mom, baby", action "patting, patting on back" and so on.

S203, determining a semantic understanding result of the multimodal content according to the above multimodal knowledge nodes, a pre-constructed multimodal knowledge graph and the multimodal content.

The multimodal knowledge graph includes: multimodal knowledge nodes and an association relationship between the multi- modal knowledge nodes.

In this embodiment, the multimodal knowledge nodes and the association relationship between the multimodal knowledge nodes included in the multimodal knowledge graph is obtained by analyzing a large number of multimodal content samples and training with analysis results based on experience knowledge in real life.

It should be understood that the multimodal knowledge nodes corresponding to the multimodal content may be at least two knowledge nodes, and multiple knowledge nodes obtained by analysis is collectively referred to as multimodal knowledge nodes in the embodiments.

Exemplarily, after determining the multimodal knowledge nodes corresponding to the multimodal content, firstly, an association relationship between the multimodal knowledge nodes and the multimodal knowledge graph is established, and then the semantic understanding result of the multimodal content can be determined by considering the multimodal knowledge nodes, the pre-constructed multimodal knowledge graph and the multimodal content, through representation learning, knowledge association, computational reasoning and other technologies.

Knowledge association can solve the problem of association between multimodal content and a multimodal knowledge graph, and specifically, the steps of knowledge association mainly include: knowledge recognition, and knowledge association, ranking and decision-making; computational reasoning can be understood as combining a knowledge graph, multimodal content and fusion information to calculate and infer information implicitly contained in the multimodal content.

For example, with reference to the schematic diagram of the scenario shown in FIG. 3 above, through visual analysis and text understanding, the persons "mom, baby" and the actions "patting, patting on back" will be recognized; based on visual analysis, it can be known that "a mom is patting a baby's back", these knowledge nodes are associated with the multimodal knowledge graph, for example, the baby is associated with a baby in the multimodal knowledge graph, and the mom is associated with a mom in the multimodal knowledge graph, the action of patting on back and vomiting, etc. According to the mom, the baby, the action of patting on back, omitting, etc. in the multimodal knowledge graph, an actual event in the video is inferred that "a mom is burping a baby" (Note: burping is a noun in the field of childcare), that is, the semantic understanding result of the video.

As another example, if the multimodal content is a clip of a movie, "In the video: on a rooftop, two people stand against each other, one of them points a gun at the other person's forehead; the clip is accompanied by a text description: I'm sorry, I'm a policeman". At this time, the multimodal knowledge nodes corresponding to the multimodal content may include: scenario "rooftop", entity "person, gun", action "a gun pointing at" and so on. And then, in combination with the multimodal knowledge graph, it can be inferred that it is a clip of the movie "Infernal Affairs", which is the semantic understanding result of the movie segment.

Exemplarily, FIG. 4 is a schematic diagram of processing multimodal content provided in this embodiment. As shown in FIG. 4, in this embodiment, the process of processing the multimodal content may include an offline process and an online process, where the offline process is mainly to construct a multimodal knowledge graph based on a general knowledge graph and multimodal content samples. The online process includes: receiving multimodal content input externally, performing multimodal content analysis to obtain multimodal knowledge nodes, and then associating the multimodal knowledge nodes with the multimodal knowledge graph, and performing multimodal fusion to a result of multimodal content analysis and the multimodal knowledge graph, and performing semantic understanding on the basis of combining with the multimodal knowledge graph to output a semantic understanding result.

From the above analysis, it can be seen that in this embodiment, by comprehensively using the text, vision or voice content of multimodal content and a pre-constructed multimodal knowledge graph, semantic understanding of the multimodal content can be well achieved, and the problem of inaccurate semantic understanding can be avoided.

Further, in the embodiment of the present disclosure, after the semantic understanding result of the multimodal content is determined, the semantic understanding result may be represented through a semantic representation, where the semantic representation may include an explicit semantic representation or an implicit semantic representation. The explicit semantic representation includes a semantic representation based on a knowledge graph. The implicit semantic representation refers to a vector representation of the multimodal content and an explicit understanding result.

For example, regarding the burping event, the output of the explicit semantic representation is: the event is burping, the entities includes a mom and a baby, the actions includes an action of patting on back, omitting, etc. And an implicit semantic representation is to represent an event, which has already been understood, in a form of a vector.

Exemplarily, this embodiment uses multimodal representation learning to solve the representation problem of multimodal content, which mainly includes the following methods: representation learning based on deep learning network, representation learning based on graph neural network (GNN), network representation learning, etc.

The semantic understanding result in this embodiment contains accurate semantic understanding information which may be applied to an intelligent application, for example, intelligent recommendation, intelligent search, intelligent dialogue system or other scenarios.

Specifically, in a possible design of this embodiment, the multimodal content processing method may further include the following step:
outputting the semantic understanding result of the multimodal content based on a semantic representation method of the knowledge graph.

In this embodiment, after the semantic understanding result of the multimodal content is obtained, if it needs to be output directly, it can be output through an explicit manner such as a semantic representation method, where the explicit manner is an easy form for a user to understand.

For example, regarding the video clip in the childcare scenario above, the "burping" event may be directly output in a text form, so that a user can directly determine the true meaning of the video.

In another possible design of this embodiment, the multimodal content processing method may further include the following steps:
obtaining a recommended resource of the same type as the multimodal content according to a vector representation of the semantic understanding result; and pushing the recommended resource to the user.

Exemplarily, when a user is watching a certain type of video, it indicates that the user is more interested in the type of video. Therefore, when the semantic understanding result corresponding to the multimodal content is applied to an intelligent recommendation scenario, the determined semantic understanding result described above may be represented with a vector, and the vector representation of the semantic understanding result may be directly used as an input for intelligent recommendation, so as to obtain a recommended resource of the same type as the multimodal content from network resources and push the same to the user, thereby improving the accuracy of intelligent recommendation.

For example, the video that the user is watching is a video on how to burp correctly. After the video is played, the electronic device may determine another video which teaches you how to burp correctly from the network resources based on the vector representation of burping, so as to achieve accurate resource recommendation.

In yet another possible design of this embodiment, the multimodal content processing method may further include the following steps:
determining a text understanding result of the multimodal content according to the vector representation of the semantic understanding result; performing a search process to obtain a search result for the multimodal content according to the text understanding result, and outputting the search result for the multimodal content.

In this embodiment, because a video usually contains less text, when the content is searched based on the video input by a user, few search results may be obtained, resulting in a problem of inaccurate search results. However, the determined semantic understanding result described above is represented by a vector to determine the text understanding result of multimodal content, and the text understanding result is used as an input of intelligent search, so that more search results can be determined, thereby improving the accuracy of the intelligent search.

According to the multimodal content processing method provided in the embodiments of the present disclosure, a content processing request of a user is received, where the content processing request is configured for semantic understanding of the multimodal content to be processed, the multimodal content is analyzed to obtain multimodal knowledge nodes corresponding to the multimodal content, a semantic understanding result of the multimodal content is determined based on the multimodal knowledge nodes, a pre-constructed multimodal knowledge graph and the multimodal content, the multimodal knowledge graph including: multimodal knowledge nodes and an association relationship between the multimodal knowledge nodes. The technical solution combines multimodal knowledge nodes of multimodal content and the multimodal knowledge graph to understand the multimodal content, so as to obtain an accurate semantic understanding result, which lays a foundation for an accurate application of the multimodal content.

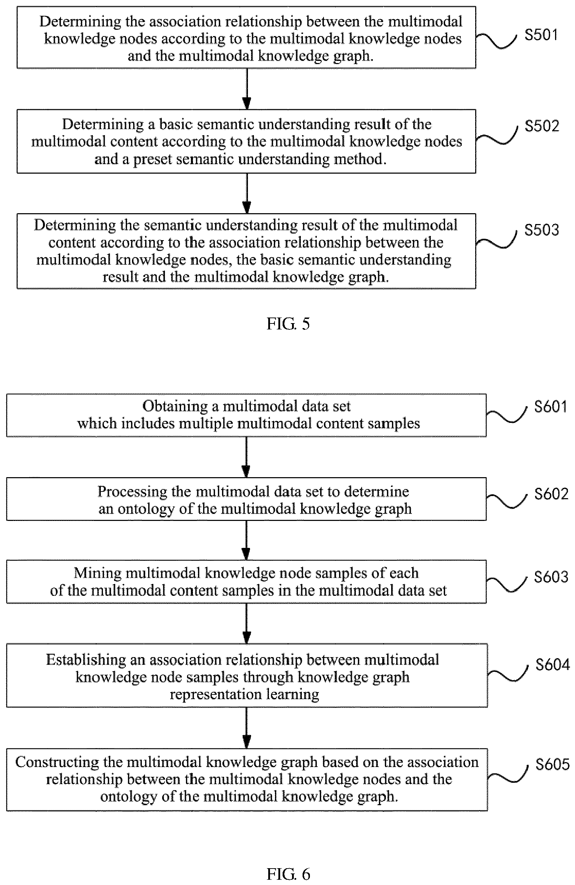

Exemplarily, on the basis of the above embodiment shown in FIG. 2, FIG. 5 is a schematic flowchart of a multimodal content processing method according to a second embodiment of the present disclosure. As shown in FIG. 5, in this embodiment, the above S203 may be implemented by the following steps:
S501, determining the association relationship between the multimodal knowledge nodes according to the multimodal knowledge nodes and the multimodal knowledge graph.

In this embodiment, regarding the determined multimodal knowledge nodes corresponding to the multimodal content, whether or not corresponding multimodal knowledge nodes exist in the multimodal knowledge graph is determined through searching in the multimodal knowledge graph. If the corresponding multimodal knowledge nodes exist in the multimodal knowledge graph, it is determined that the two have an association relationship, and in combination with a practical application, the association relationship between the multimodal knowledge nodes is determined.

Exemplarily, the association relationship between multimode knowledge nodes includes at least one of the following relationships: entity attribute, entity relationship, entity subordinate relationship, part-of relationship, facet-of relationship, or related-to relationships, etc.

The specific representation form of the association relationship between multimodal knowledge nodes is not limited in the embodiments of the present disclosure, which may be determined according to an actual condition.

S502, determining a basic semantic understanding result of the multimodal content according to the multimodal knowledge nodes and a preset semantic understanding method.

Exemplarily, the preset semantic understanding method may include a preset deep learning method and/or a preset fusion method. Correspondingly, the basic semantic understanding result in this embodiment may include: a first semantic understanding result and/or a second semantic understanding result.

The first semantic understanding result is obtained by performing semantic understanding on the multimodal content according to the multimodal knowledge nodes and a preset deep learning method; the second semantic understanding result is obtained by fusing multiple single-modal semantic understanding results corresponding to the multimodal knowledge nodes according to a preset fusion method.

As an example, after understanding the multimodal content in each modality, information of each modality, that is, the multimodal knowledge nodes, may be obtained, and fusion is performed to the multimodal knowledge nodes through deep neural networks (DNN) to present them by a vector, and then in combination with different application scenarios, the first semantic understanding result is obtained.

As another example, regarding multimodal content, firstly text, visual, voice or other understanding technologies are used, respectively, to obtain single-modal semantic understanding results, and then all the single-modal semantic understanding results are fused according to a preset fusion method to obtain the second semantic understanding result.

It should be understood that the first semantic understanding result and the second semantic understanding result in the embodiments of the present disclosure is only for distinguishing the basic semantic understanding results obtained through two manners, and the specific relationship thereof is not limited.

S503, determining the semantic understanding result of the multimodal content according to the association relationship between the multimodal knowledge nodes, the basic semantic understanding result and the multimodal knowledge graph.

In an implementation, this step may be understood as a process of multimodal fusion. Multimodal fusion mainly aims to unified modeling of multimodal knowledge nodes to determine the semantic understanding result of multimodal content.

Various methods are adopted in the present disclosure to comprehensively solve the problem of multimodal fusion, including: alignment fusion based on knowledge graph association, fusion modeling based on deep neural network, fusion based on single-modal understanding results, etc. The alignment fusion based on knowledge graph association refers to: solving the problem of alignment and fusion by modeling an association between multimodal content and a knowledge graph and using knowledge implicitly contained in the knowledge graph. The fusion modeling based on deep neural networks is namely the process of obtaining the first semantic understanding result in S502 above, and the fusion based on single-modal understanding results is namely the process of obtaining the second semantic understanding result in S502 above.

In the multimodal content processing method provided in the present disclosure, an association relationship between multimodal knowledge nodes is determined according to the multimodal knowledge nodes and the multimodal knowledge graph, a basic semantic understanding result of the multimodal content is determined according to the multimodal knowledge nodes and a preset semantic understanding method, and a semantic understanding result of the multimodal content is determined according to the foregoing association relationship between the multimodal knowledge nodes, the basic semantic understanding result and the multimodal knowledge graph. In the present technical solution, the association result based on the knowledge graph, the fusion modeling result based on deep neural network, and the fusion scheme based on single-modal understanding results jointly realize a semantic understanding of the multimodal content, which further improves the accuracy in understanding of multimodal content.

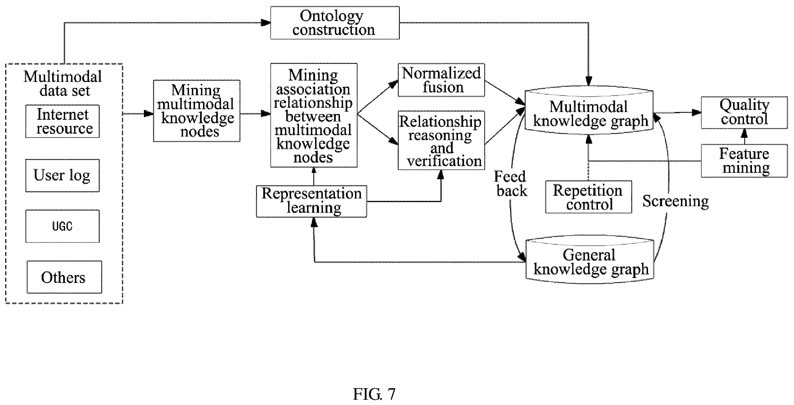

Exemplarily, on the basis of the foregoing embodiments, FIG. 6 is a schematic flowchart of a multimodal content processing method provided in a third embodiment of the present disclosure. FIG. 7 is a schematic diagram of a framework for constructing a multimodal knowledge graph. As shown in FIG. 6, in this embodiment, the method may further include the following steps:
S601, obtaining a multimodal data set which includes multiple multimodal content samples.

In this embodiment, the multimodal data set of multimodal content may be obtained from various websites or systems, and the multimodal data set includes multiple multimodal content samples. It should be understood that the multimodal content samples in the multimodal data set may be used as samples for constructing a multimodal knowledge graph.

Exemplarily, with reference to FIG. 7, a multimodal content sample in the multimodal data set may be an Internet resource, a user log, user generated content (UGC), or other forms of resources. A presentation form of the multimodal content samples is not limited in the embodiment of the present disclosure, which may be determined according to an actual situation.

S602, processing the multimodal data set to determine an ontology of the multimodal knowledge graph.

An ontology is a specification for modeling concepts, which is an abstract model that describes the objective world, and which gives a clear definition of concepts and their connections in a formalized manner. Knowledge reflected by an ontology is a clearly defined consensus and a conceptual framework recognized in the industry, which generally does not change, such as "person", "thing", "object". It can be seen that an ontology is the basis of a multimodal knowledge graph, and only when an ontology of a multimodal knowledge graph is determined, may various kinds of knowledge be related.

Therefore, with reference to FIG. 7, in this embodiment, an ontology of the multimodal knowledge graph is constructed by analyzing the multimodal content samples in the multimodal data set, and then the process of mining multimodal knowledge nodes in S603 and the process of mining an association relationship between the multimodal knowledge nodes in S604 are performed.

S603, mining multimodal knowledge node samples of each of the multimodal content samples in the multimodal data set.

Exemplarily, by mining knowledge nodes of the multimodal content samples in the multimodal data set, multimodal knowledge node samples of each multimodal content sample may be determined. The multimodal knowledge node samples may include at least one of the following: an entity, a concept, an event, an action, a function, a theme, a scene, a source, a visual resource, a voice resource, a text resource, a user behavior or the like. Here, an entity is an integration of an ontology, an instance and a relationship. For example, "person" is a concept in an ontology frame, and related attributes such as "gender" are also specified in the concept. Xiaoming is a specific person, called an instance, so Xiaoming also has a gender, Xiaoming and related attributes which presents the ontology concept ("person") of Xiaoming are collectively referred to as an entity (simply speaking: ontology + instance).

For other explanation of the multimodal knowledge node, reference may be made to the introduction to the foregoing application scenario as shown in FIG. 1, which will not be repeated here.

S604, establishing an association relationship between multimodal knowledge node samples through knowledge graph representation learning.

Exemplary, the relationship between the multimodal knowledge point samples includes: entity attribute/relationship, subordinate relationship, part-of relationship, facet-of relationship, related-to relationship or other knowledge relationships. A knowledge graph is a form of graph organization, various entities may be associated through semantic association, that is, multiple knowledge nodes are associated to form an association relationship between multimodal knowledge nodes.

For example, taking the video of the burping event in childcare as an example, the relationship between multimodal knowledge nodes may include: the relationship between the mother and the baby, the mom and the patting action, the patting and the back of the baby, etc. It should be understood that, in this embodiment, the specific presentation form of the association relationship between the multimodal knowledge nodes is not limited.

In an implementation, with reference to FIG. 7, on the basis of a general knowledge graph, the association relationship between the multimodal knowledge nodes may be determined by means of representation learning.

S605, constructing the multimodal knowledge graph based on the association relationship between the multimodal knowledge nodes and the ontology of the multimodal knowledge graph.

Exemplarily, with reference to FIG. 7, the process of constructing a multimodal knowledge graph may include one or more of the following: ontology construction, knowledge recognition, knowledge extraction, knowledge association, knowledge building, knowledge fusion, representation learning, knowledge reasoning, repetition control, quality control, feature construction, etc. The specific processing flow of the multimodal knowledge graph is not limited in the embodiments of the present disclosure, which may be determined according to an actual condition.

In the frame diagram shown in FIG. 7, after performing normalized fusion, relationship reasoning and verification to the relationship between the multimodal knowledge nodes, further in combination with ontology construction and screening of the general knowledge graph, the multimodal knowledge graph is obtained. In addition, the multimodal knowledge graph may feed back to the general knowledge graph, that is, continuously improve the general knowledge graph. Further, in combination with repetition control, feature mining, quality control, or the like, the multimodal knowledge graph can be continuously updated and improved.

In the above, ontology construction for a person is the process of determining a type of a person; knowledge recognition is the process of identifying knowledge nodes in multimodal content, such as an entity, a concept, an event, an action or the like; knowledge extraction is the process of extracting knowledge nodes from multimodal content; knowledge association is the process of establishing an association relationship between multiple knowledge nodes, and knowledge fusion is the process of joint-understanding after information of the same entity is fused; representation learning is the process of representing knowledge nodes, for example, displaying an output (which is easy to understand), an implicit vector (to facilitate machine operations), etc.; knowledge reasoning is the process of inferring new knowledge based on the existing knowledge nodes and association relationship; repetition control is the process of fusion and deduplication; quality control is the process of removing wrong knowledge and retaining correct knowledge, and feature construction is the process of adding some features or descriptions to each knowledge node for use.

It should be understood that the specific manners and steps for constructing a multimodal knowledge graph is not limited in the embodiments of the present disclosure, which may be flexibly adjusted according to an actual condition.

In the multimodal content processing method provided in the embodiments of the present disclosure, a multimodal data set is obtained, and the multimodal data set is processed to determine an ontology of the multimodal knowledge graph, multimodal knowledge node samples of each multimodal content sample in the multimodal data set are mined, and an association relationship between the multimodal knowledge node samples is established through knowledge graph representation learning, the multimodal knowledge graph is constructed based on the association relationship between the samples of multimodal knowledge nodes and the ontology of the multimodal knowledge graph, so that semantic interpretation is designated to the knowledge nodes, which lays the foundation for a correct semantic understanding of multimodal content.

Based on the above analysis, it can be seen that, for the semantic understanding based on a knowledge graph, the knowledge graph is fused in understanding, so that a better semantic understanding of multimodal content can be achieved, and accuracy of a semantic understanding is improved. Through constructing a multimodal knowledge graph, the multimodal knowledge graph can be used to give a correct semantic understanding, and knowledge enhancement is realized by means of multimodal content representation learning, which lays the foundation for obtaining an accurate semantic understanding result of multimodal content.

The specific implementations of the multimodal content processing method provided in the embodiments of the present disclosure have been described in the above. The following is an apparatus embodiment of the present disclosure, which can be used to execute the method embodiment of the present disclosure. For details not disclosed in the apparatus embodiment of the present disclosure, reference may be made to the method embodiments of the present disclosure.

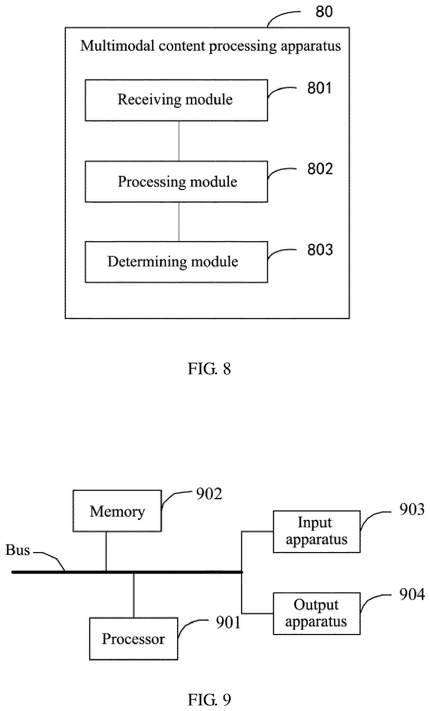

FIG. 8 is a schematic structural diagram of a multimodal content processing apparatus provided in an embodiment of the present disclosure. The apparatus may be integrated in an electronic device or implemented by an electronic device. As shown in FIG. 8, in this embodiment, the multimodal content processing apparatus 80 may include: a receiving module 801, a processing module 802 and a determining module 803.

The receiving module 801 is configured to receive a content processing request of a user which is configured to request semantic understanding of multimodal content to be processed.

The processing module 802 is configured to analyze the multimodal content to obtain multimodal knowledge nodes corresponding to the multimodal content.

The determining module 803 is configured to determine a semantic understanding result of the multimodal content according to the multimodal knowledge nodes, a pre-constructed multimodal knowledge graph and the multimodal content, the multimodal knowledge graph including: the multimodal knowledge nodes and an association relationship between the multimodal knowledge nodes.

In a possible design of the embodiment of the present disclosure, the determining module 803 is specifically configured to determine the association relationship between the multimodal knowledge nodes according to the multimodal knowledge nodes and the multimodal knowledge graph, determine a basic semantic understanding result of the multimodal content according to the multimodal knowledge nodes and a preset semantic understanding method, and determine the semantic understanding result of the multimodal content according to the association relationship between the multimodal knowledge nodes, the basic semantic understanding result and the multimodal knowledge graph.

The basic semantic understanding result includes: a first semantic understanding result and/or a second semantic understanding result;
the first semantic understanding result is obtained by performing semantic understanding on the multimodal content according to the multimodal knowledge nodes and a preset deep learning method;
the second semantic understanding result is obtained by fusing multiple single-modal semantic understanding results corresponding to the multimodal knowledge nodes according to a preset fusion method.

In another possible design of the embodiment of the disclosure, the processing module 802 is further configured to obtain a multimodal data set which includes multiple multimodal content samples, process the multimodal data set to determine an ontology of the multimodal knowledge graph, mine multimodal knowledge node samples of each of the multimodal content samples in the multimodal data set, establish an association relationship between the multimodal knowledge node samples through knowledge graph representation learning, and construct the multimodal knowledge graph based on the association relationship between the multimodal knowledge nodes and the ontology of the multimodal knowledge graph.

In yet another possible design of the embodiment of the present disclosure, the apparatus further includes: an output module;
the output module is configured to output a semantic understanding result of the multimodal content based on a semantic representation method of a knowledge graph.

In yet another possible design of the embodiment of the present disclosure, the apparatus further includes: an output module;
the processing module 802 is further configured to obtain a recommended resource of the same type as the multimodal content according to a vector representation of the semantic understanding result; and
the output module is configured to push the recommended resource to the user;
or,
the determining module 803 is further configured to determine a text understanding result of the multimodal content according to the vector representation of the semantic understanding result;
the processing module 802 is further configured to perform a search process to obtain a search result for the multimodal content according to the text understanding result; and
the output module is configured to output the search result for the multimodal content.

The apparatus provided in the embodiment of the present disclosure may be used to execute the methods in the embodiments as shown in FIG. 2 to FIG. 7. The implementation principles and technical effects are similar, which will not be repeated here.

It should be noted that it should be understood that the division of various modules of the above apparatus is only a division of logical functions, and in an actual implementation, some or all of the modules may be integrated into a physical entity or may be physically separated. And these modules may all be implemented in the form of a processing element calling software; they may also be implemented in the form of hardware; or, some modules may also be implemented in the form of a processing element calling software, and some modules may be implemented in the form of hardware. For example, the processing module may be a stand-alone processing element, or it may be implemented by being integrated in a chip of the above-mentioned apparatus. In addition, it may also be stored in a memory of the above-mentioned apparatus in the form of program codes which are called by a processing element of the above-mentioned apparatus to execute the functions of the above-mentioned processing modules. The implementation of other modules is similar. In addition, all or part of these modules may be integrated together or may be implemented separately. The processing element described here may be an integrated circuit with a signal processing capability. In an implementation process, each step of the above method or each of the above modules may be implemented with a hardware integrated logic circuit in a processor element or instructions in the form of software.

Further, according to an embodiment of the present disclosure, the present disclosure further provides an electronic device and a readable storage medium.

FIG. 9 is a block diagram of an electronic equipment used to implement the multimodal content processing method according to an embodiment of the present disclosure. As shown in FIG. 9, the electronic device is intended to represent various forms of a digital computer, such as a laptop computer, a desktop computer, a workbench, a personal digital assistant, a server, a blade server, a mainframe computer, or other suitable computers. The electronic device may also represent various forms of a mobile device, such as a personal digital processor, a cellular phone, a smart phone, a wearable device, or other similar computing devices. The components shown herein and connections and relationships thereof, and their functions are merely exemplary, which are not intended to limit the implementation of the disclosure described and/or claimed.

As shown in FIG. 9, the electronic device includes: one or more processors 901, a memory 902, and interfaces for connecting various components, including a high-speed interface and a low-speed interface. Various components are connected to each other via different buses, and they can be installed on a common mainboard or otherwise as needed. The processor may process instructions executed within the electronic device, including instructions stored in or on a memory to display graphical information of a GUI on an external input/output apparatus (such as a display device coupled to the interface). In another embodiment, multiple processors and/or multiple buses may be used with multiple memories and multiple memories if needed. Similarly, multiple electronic devices may be connected, and each of the devices provides some necessary operations (for example, as a server array, a group of blade servers, or a multi-processor system). In FIG. 9, a processor 901 is taken as an example.

The memory 902 is a non-transitory computer-readable storage medium provided in the present disclosure, where the memory stores instructions executable by at least one processor to cause the at least one processor to execute the multimodal content processing method provided in the present disclosure. The non-transitory computer-readable storage medium of the present disclosure stores computer instructions for causing the computer to execute the multimodal content processing method provided in the present disclosure.

As a non-transitory computer-readable storage medium, the memory 902 may be used to store a non-transitory software program, a non-transitory computer executable program or a module, such as a program instruction/module corresponding to the multimodal content processing method in the embodiments of the present disclosure (for example, the receiving module 801, the processing module 802, and the determining module 803 shown in FIG. 8). The processor 901 executes a non-transitory software program, an instruction, or a module stored in the memory 902 to execute various functional applications and data processing of the server, that is, to implement the multimodal content processing method in the foregoing method embodiments.

The memory 902 may include a storage program area and a storage data area, where, the storage program area may store an operating system and an application program required for at least one function; the storage data area may store data created according to the use of the electronic device for processing a multimodal content. In addition, the memory 902 may include a high-speed random access memory, or it may also include a non-transitory memory, such as at least one magnetic disk storage device, a flash memory device, or other non-transitory solid-state storage devices. In some embodiments, the memory 902 may exemplarily include memories set remotely with respect to the processor 901, and these remote memories may be connected to the electronic device for multimodal content processing through a network. Examples of the above network include but not limited to the Internet, an intranet, a local area network, a mobile communication network, or a combination thereof.

The electronic device for the multimodal content processing method may further include: an input apparatus 903 and an output apparatus 904. The processor 901, the memory 902, the input apparatus 903, and the output apparatus 904 may be connected via a bus or otherwise. In FIG. 9, a connection via a bus is used as an example.

The input apparatus 903 may receive a digital or character information input, and generate a key signal input related to a user setting or function control of the electronic device for multimodal content processing, such as a touch screen, a keypad, a mouse, a trackpad, a touchpad, a pointing stick, one or more mouse buttons, a trackballs a joystick, etc. The output apparatus 904 may include a display device, an auxiliary lighting device (for example, an LED), a tactile feedback device (for example, a vibration motor) or the like. The display device may include but not limited to, a liquid crystal display (LCD), a light emitting diode (LED) display, or a plasma display. In some embodiments, the display device may be a touch screen.

Various embodiments of the systems and techniques described herein may be implemented in a digital electronic circuit system, an integrated circuit system, a dedicated ASIC (application specific integrated circuit), a computer hardware, a firmware, a software, and/or a combination thereof. The various embodiments may include: implemented in one or more computer programs, the one or more computer programs may be executed and/or interpreted on a programmable system including at least one programmable processor. The programmable processor may be a dedicated-purpose or a general-purpose programmable processor, which may receive data and instructions from a storage system, at least one input apparatus, and at least one output apparatus, and transmit the data and instructions to the storage system, the at least one input apparatus, and the at least one output apparatus.

These computing programs (also called programs, software, software applications, or codes) include machine instructions of programmable processors, and these computing programs may be implemented by utilizing high-level process and/or object-oriented programming languages, and/or assembly/machine languages. As used herein, the terms "machine-readable medium" and "computer-readable medium" refer to any computer program product, device, and/or apparatus (e.g., a magnetic disk, an optical disk, a memory, a programmable logic devices (PLD)) used to provide machine instructions and/or data to a programmable processor, including a machine-readable medium that receives machine instructions as machine-readable signals. The term "machine-readable signal" refers to any signal used to provide machine instructions and/or data to a programmable processor.

In order to provide interaction with a user, the system and technology described herein may be implemented on a computer with a display device (e.g., a CRT (cathode ray tube) or LCD (liquid crystal display) monitor) for displaying information to the user; a keyboard and a pointing device (for example, a mouse or a trackball), which may be used by a user to provide input to the computer. Other kinds of devices may also be used to provide interaction with the user; for example, a feedback provided to the user may be any form of sensory feedback (for example, a visual feedback, an auditory feedback, or a tactile feedback); and an input received from a user may be in any form (including an acoustic input, a voice input, or a tactile input).

The system and technique described herein may be implemented in a computing system that includes a back-end component (e.g., as a data server), or a computing system that includes a middleware component (e.g., application servers), or a computing system that includes a front-end component (e.g., a user computer with a graphical user interface or a web browser, through which a user may interact with the implementations of the system and technique described herein), or a computing system that includes any combination of such a back-end component, middleware component, or front-end component. The components of the system may be interconnected by any form or medium of digital data communication (e.g., a communication network). Examples of the communication network include: a local area network (LAN), a wide area network (WAN) and the Internet.

The computer system may include a client and a server. The client and the server are generally far away from each other and usually interact via a communication network. The relationship between the client and the server is generated by computer programs that run on corresponding computers and have a client-server relationship with each other.

Further, the present disclosure also provides a multimodal content processing method, including:
determining multimodal content to be processed in response to an external content processing request;
determining a semantic understanding result of the multimodal content according to a pre-constructed knowledge graph and the multimodal content.

According to the technical solution of the embodiment of the present disclosure, a content processing request of a user is received, where the content processing request is configured for semantic understanding of the multimodal content to be processed, the multimodal content is analyzed to obtain multimodal knowledge nodes corresponding to the multimodal content, a semantic understanding result of the multimodal content is determined based on the multimodal knowledge nodes, a pre-constructed multimodal knowledge graph and the multimodal content, the multimodal knowledge graph including: multimodal knowledge nodes and an association relationship between the multimodal knowledge nodes. The technical solution combines multimodal knowledge nodes of a multimodal content and a multimodal knowledge graph to understand the multimodal content, so as to obtain an accurate semantic understanding result, which lays a foundation for an accurate application of multimodal content.

It should be understood that the various forms of processes shown above may be used to reorder, add, or delete a step. For example, the steps described in the present disclosure may be performed in parallel, sequentially, or in a different order, as long as the desired results of the technical solutions disclosed in the present disclosure can be achieved, no limitation is made herein.

The above specific embodiments do not constitute a limitation to the protection scope of the present disclosure. Those skilled in the art should understand that various modifications, combinations, sub-combinations and substitutions may be made according to a design requirement and other factors. Any modification, equivalent replacement and improvement made within the spirit and principle of the present disclosure shall be included in the protection scope of the present disclosure.

## Claims

1. A multimodal content processing method, comprising:
receiving (S201) a content processing request of a user, the content processing request being configured to request semantic understanding of multimodal content to be processed;
analyzing (S202) the multimodal content to obtain multimodal knowledge nodes corresponding to the multimodal content; and
determining (S203) a semantic understanding result of the multimodal content according to the multimodal knowledge nodes, a pre-constructed multimodal knowledge graph and the multimodal content, the multimodal knowledge graph comprising: the multimodal knowledge nodes and an association relationship between the multimodal knowledge nodes.

2. The multimodal content processing method according to claim 1, wherein the determining (S203) a semantic understanding result of the multimodal content according to the multimodal knowledge nodes, a pre-constructed multimodal knowledge graph and the multimodal content comprises:
determining (S501) the association relationship between the multimodal knowledge nodes according to the multimodal knowledge nodes and the multimodal knowledge graph;
determining (S502) a basic semantic understanding result of the multimodal content according to the multimodal knowledge nodes and a preset semantic understanding method; and
determining (S503) the semantic understanding result of the multimodal content according to the association relationship between the multimodal knowledge nodes, the basic semantic understanding result and the multimodal knowledge graph.

3. The multimodal content processing method according to claim 2, wherein the basic semantic understanding result comprises: at least one of a first semantic understanding result or a second semantic understanding result;
the first semantic understanding result is obtained by performing semantic understanding on the multimodal content according to the multimodal knowledge nodes and a preset deep learning method;
the second semantic understanding result is obtained by fusing multiple single-modal semantic understanding results corresponding to the multimodal knowledge nodes according to a preset fusion method.

4. The multimodal content processing method according to any one of claims 1 to 3, further comprising:
obtaining (S601) a multimodal data set which comprises multiple multimodal content samples;
processing (S602) the multimodal data set to determine an ontology of the multimodal knowledge graph;
mining (S603) multimodal knowledge node samples of each of the multimodal content samples in the multimodal data set;
establishing (S604) an association relationship between the multimodal knowledge node samples through knowledge graph representation learning; and
constructing (S605) the multimodal knowledge graph based on the association relationship between the multimodal knowledge node samples and the ontology of the multimodal knowledge graph.

5. The multimodal content processing method according to any one of claims 1 to 3, further comprising:
outputting a semantic understanding result of the multimodal content based on a semantic representation method of a knowledge graph.

6. The multimodal content processing method according to any one of claims 1 to 3, further comprising:
obtaining a recommended resource of the same type as the multimodal content according to a vector representation of the semantic understanding result; and
pushing the recommended resource to the user;
or,
determining a text understanding result of the multimodal content according to the vector representation of the semantic understanding result; and
performing a search process to obtain a search result for the multimodal content according to the text understanding result.

7. A multimodal content processing apparatus (80), comprising: a receiving module (801), a processing module (802), and a determining module (803);
the receiving module (801) is configured to receive a content processing request of a user, the content processing request being configured to request semantic understanding of multimodal content to be processed;
the processing module (802) is configured to analyze the multimodal content to obtain multimodal knowledge nodes corresponding to the multimodal content;
the determining module (803) is configured to determine a semantic understanding result of the multimodal content according to the multimodal knowledge nodes, a pre-constructed multimodal knowledge graph and the multimodal content, the multimodal knowledge graph comprising: the multimodal knowledge nodes and an association relationship between the multimodal knowledge nodes.

8. The multimodal content processing apparatus (80) according to claim 7, wherein the determining module (803) is configured to determine the association relationship between the multimodal knowledge nodes according to the multimodal knowledge nodes and the multimodal knowledge graph, determine a basic semantic understanding result of the multimodal content according to the multimodal knowledge nodes and a preset semantic understanding method, and determine the semantic understanding result of the multimodal content according to the association relationship between the multimodal knowledge nodes, the basic semantic understanding result and the multimodal knowledge graph.

9. The multimodal content processing apparatus (80) according to claim 8, wherein the basic semantic understanding result comprises: at least one of a first semantic understanding result or a second semantic understanding result;
the first semantic understanding result is obtained by performing semantic understanding on the multimodal content according to the multimodal knowledge nodes and a preset deep learning method;
the second semantic understanding result is obtained by fusing multiple single-modal semantic understanding results corresponding to the multimodal knowledge nodes according to a preset fusion method.

10. The multimodal content processing apparatus (80) according to any one of claims 7 to 9, wherein the processing module (802) is further configured to obtain a multimodal data set which comprises multiple multimodal content samples, process the multimodal data set to determine an ontology of the multimodal knowledge graph, mine multimodal knowledge node samples of each of the multimodal content samples in the multimodal data set, establish an association relationship between the multimodal knowledge node samples through knowledge graph representation learning, and construct the multimodal knowledge graph based on the association relationship between the multimodal knowledge node samples and the ontology of the multimodal knowledge graph.

11. The multimodal content processing apparatus (80) according to any one of claims 7 to 9, further comprising: an output module; wherein
the output module is configured to output a semantic understanding result of the multimodal content based on a semantic representation method of a knowledge graph.

12. The multimodal content processing apparatus (802) according to any one of claims 7 to 9, further comprising: an output module;
the processing module (802) is further configured to obtain a recommended resource of the same type as the multimodal content according to a vector representation of the semantic understanding result; and
the output module is configured to push the recommended resource to the user;
or,
the determining module (803) is further configured to determine a text understanding result of the multimodal content according to the vector representation of the semantic understanding result;
the processing module (802) is further configured to perform a search process to obtain a search result for the multimodal content according to the text understanding result; and
the output module is configured to output the search result for the multimodal content.

13. An electronic device, comprising:
at least one processor (901); and
a memory (902) communicatively connected to the at least one processor (901); wherein,
the memory (902) stores instructions executable by the at least one processor (901), the instructions, when executed by the at least one processor (901), causing the at least one processor (901) to execute the method according to any one of claims 1 to 6.

14. A non-transitory computer-readable storage medium with computer instructions stored thereon, wherein the computer instructions are configured to cause a computer to perform the method according to any one of claims 1-6.

15. A multimodal content processing method, comprising:
determining multimodal content to be processed in response to an external content processing request;
determining a semantic understanding result of the multimodal content according to a pre-constructed knowledge graph and the multimodal content.
